# EUROPÄISCHE PATENTSCHRIFT

(11) **EP 2 647 663 B1**
(45) Veröffentlichungstag und Bekanntmachung des Hinweises auf die Patenterteilung: **03.05.2017**
(21) Anmeldenummer: 13161300.2
(22) Anmeldetag: 27.03.2013
(51) Int. Cl.: E04B 1/80, C08J 9/36, C08J 9/232, C08J 9/00

(54) **WÄRMEDÄMMPLATTE**
HEAT INSULATION PANEL
PANNEAU D'ISOLATION THERMIQUE

(30) Priorität: 04.04.2012 CH 4702012
(43) Veröffentlichungstag der Anmeldung: 09.10.2013
(73) Patentinhaber: Sager AG, 5724 Dürrenäsch (CH)
(72) Erfinder: Frei, Johann Martin, 5724 Dürrenäsch (CH); Speck, Daniel, 5734 Reinach (CH)
(74) Vertreter: Feldmann, Clarence Paul

(56) Entgegenhaltungen:
- EP-A1- 2 557 247
- WO-A1-2006/056387
- CH-A2- 701 908

## Beschreibung

Die Erfindung betrifft eine Wärmedämmplatte zur Wärmeisolation von Aussenfassaden, Sockelbereichen, Wänden, Decken, Dächern oder anderen Teilen von Gebäuden, umfassend eine beschichtete Dämmplatte resp. Reflektorplatte aus expandiertem Polystyrol (EPS).

Dämmplatten aus expandiertem Polystyrol zur Isolation von Gebäudeteilen u. a. sind hinlänglich bekannt. Sie werden z. B. durch Expansion von Styrolpolymerisatpartikeln in Dampfkammern und nachfolgenden Zuschnitt hergestellt.

Zwecks Verbesserung der Dämmwirkung werden neben dickeren Platten zunehmend auch solche hergestellt, die ergänzend Partikel mit dunklen Pigmenten enthalten, z. B. aus Russ, Farbstoffen, Grafit u. a. Der Anteil der pigmentierten Styrolpolymerisatpartikel kann 10-90 Gew.-% betragen, siehe z. B. DE-U-20315226, wobei ein Anteil von 30 Gew.-% oder insbesondere von 50 Gew.-% pigmentierter Partikel als besonders vorteilhaft angesehen wird, resp. nur eine Dämmplatte mit einem Verhältnis von 50:50 tatsächlich hergestellt wird.

Weiterhin sind auch Dämmplatten aus Polystyrol bekannt, die einen Anteil von 0,5-5 Gew.-% (EP-B-0620246) oder 2-8 Gew.-% (EP-B-0981574) atherman wirkende Zusätze enthalten, wobei ein Styrolpolymerisat gemäss EP-B-0981574 noch zusätzlich ein Flammschutzmittel, insbesondere organische Bromverbindungen enthält.

In der EP-A-1213118 ist ein Verfahren zur Herstellung einer Schaumstoffplatte offenbart, die aus zwei Ausgangsplatten gebildet wird. Die Ausgangsplatten, die an den Berührungsflächen extrusionshautlos sein sollen, werden mittels eines diffusionsoffenen Klebers und oder durch mechanische Verbindungselemente teilflächig miteinander verbunden. Die mechanischen Verbindungselemente bestehen dabei bevorzugt aus dem Werkstoff der Ausgangsplatten.

Es ist weiterhin bekannt, eine dunkle Reflektorplatte zwischen zwei weissen Deckplatten anzuordnen (JP-A-11058576 oder JP-A-2003193586) oder Platten aus Polystyrol mit dünneren Platten aus PUR-Schaum (EP-A-1201838) zu verbinden. Bei einer ähnlichen Dämmplatte gemäss DE-U-8226114, die insbesondere für Flachdächer verwendet wird, besteht die Platte aus einer dämmenden Grundschicht aus Hartschaum und einer nach aussen gerichteten Schutzschicht aus einem Fasermaterial.

Gemäss DE-A-19914105 kann eine Wärmedämmplatte auch mit einer abdeckenden dichten Schicht aus hohlen Kügelchen versehen sein, die in einer Trägersubstanz eingebettet sind. Diese Schicht aus Hohlkügelchen soll den Dämmwert bei gleicher Plattendicke wesentlich verbessern.

In der DE-B-102005031133 ist eine Schaumstoffplatte zur Wärmedämmung beschrieben, die 10-90 Gew.-% pigmentierte Styrolpolymerisatpartikel enthält, wobei eine Fläche der Schaumstoffplatte mindestens partiell mit einer Antireflexionsschicht versehen ist. Diese Antireflexionsschicht ist ein Beschichtungsstoff mit mindestens einem Bindemittel, einem Weisspigment und weiteren Zusätzen. Bekannt ist auch, anstelle einer Farbschicht eine Folie zu verwenden.

Die EP-A-2111962 offenbart ein Verfahren zur Herstellung einer Wärmedämmplatte, die einen Kern mit einer beidseitigen Dampfsperrschicht versehen sein soll, auf die noch eine Deckschicht aufgebracht wird. Hierbei wird auf die Dampfsperrschicht zunächst ein Kleber aus niedrig schmelzendem Material aufgebracht, auf die expandierbare Perlen aus EPS lose aufgeschüttet werden. Diese EPS-Perlen werden anschliessend unter Wärmeeinwirkung expandiert, wobei die Temperatur so hoch gewählt wird, dass die Kleberschicht erweicht.

Nach der EP-A-1201838 ist eine dicke Dämmplatte aus Polyurethan (PU) beidseitig mit je einer dünnen Platte aus EPS beschichtet.

Bei einer weiteren Platte zur Wandverkleidung in Fahrzeugen u. a. gemäss DE-U-202006016435 ist eine Schaumstoffschicht aus PP oder PE auf einer Seite mit einer Dekorschicht und auf der gegenüberliegenden Seite mit einer Sperrschicht aus PET-Schaum versehen. Zwischen den Schichten können noch Vliesschichten vorgesehen sein.

Die CH-A-701908 offenbart eine Dämmplatte, insbesondere zur Wärmeisolation von Aussenfassaden, Wänden oder anderen Teilen von Gebäuden, bestehend aus expandiertem Polystyrol (EPS), wobei Herstellung, Lagerung und Verarbeitung auf der Baustelle deutlich vereinfacht werden soll. Dies wird dadurch gelöst, dass die Dämmplatte aus zwei Schichten bzw. Ausgangsplatten, einer dämmenden Reflektorplatte (1) und einer Deckplatte (2) mit einer zusätzlichen Schutzfunktion besteht, wobei beide Platten bzw. Schichten kleberfrei und vollflächig miteinander verbunden sind.

Die WO-A-2006/056387 offenbart ebenfalls eine Dämmplatte, insbesondere zur Isolierung von Gebäuden, die aus zwei Teilen besteht, wobei der eine Teil der Dämmplatte die wesentliche Dämmwirkung erbringt, während der andere Teil eine zusätzliche Schutzfunktion erfüllt. Um bei einer derartigen Dämmplatte sowohl eine hohe Wärmedämmleistung als auch die Vorteile weisser Dämmplatten oder sonstiger Spezialdämmplatten zu erzielen, ist vorgesehen, dass der Teil der Dämmplatte, der die wesentliche Dämmwirkung erbringt, aus einem grauen expandierten Polystyrol (EPS) besteht und dass der andere Teil der Dämmplatte aus einem Kunststoff Hartschaum mit wenigstens einer weiteren Schutzeigenschaft besteht.

Die Aufgabe der Erfindung besteht nun darin, eine Wärmedämmplatte, insbesondere zur Wärmeisolation von Aussenfassaden, Sockelbereichen, unter Terrain, im FlachdachBereich sowie Wänden oder anderen Teilen von Gebäuden zu schaffen, die einfach und kostengünstig herstellbar und qualitativ hochwertig ist.
Bereitgestellt werden soll eine Wärmedämmplatte, die einen verbesserten Dämmwert und mindestens eine Zusatzfunktion aufweist.

Die Aufgabe ist mit den Merkmalen des Patentanspruchs 1 gelöst.

Eine Wärmedämmplatte umfasst eine geschäumte (und bevorzugt dicke) Dämmplatte und eine darauf befindliche Deckschicht, wobei die Deckschicht in nur einem Arbeitsschritt auf die Dämmplatte aus expandiertem Polystyrol (EPS) aufgebracht wird und eine gute Haftung zwischen der Schicht und der Dämmplatte sowie eine gute Masshaltigkeit bei geringem Aufwand erreicht werden sollen.

Die Deckschicht ist bevorzugt auf einer Längsseite der Dämmplatte angeordnet und kann dekorativen Zwecken dienen und/oder einen Schutz gegen Aufheizung infolge Sonneneinstrahlung bewirken. Bevorzugt weist die Deckschicht daher athermane wirkende Zusätze in ausreichender Menge auf, wobei zu beachten ist, dass verbindliche Normen eine weisse Oberfläche erfordern können.

Die Dämmplatte weist in bekannter Weise farbige, ggf. auch weisse, und dunkle Pigmente enthaltende Partikel, insbesondere Grafitpartikel auf, deren Anteil je nach Anforderung variieren kann. Bevorzugt enthält die Dämmplatte als Reflektorplatte zu 100% pigmentierte Partikel.

Die Deckschicht ist erfindungsgemäß eine Perlendeckschicht, insbesondere eine Einperlendeckschicht aus EPS-Perlen oder EPS-Schrot, resp. Recyclingmaterial, welche auf einen Hotmelt-Kleber oder Schaumkleber aufgebracht werden.

Eine Schaumstoffschicht kann als dünner Schaum oder Schaumkleberfilm auf die Dämmplatte vollflächig oder nur in Form eines Musters oder einer Struktur (die Reflektorplatte bleibt dann teilweise sichtbar) aufgebracht werden, dies kann auch mittels einem Film des Klebers erfolgen. Danach wird die Oberfläche, z. B. bei PU befeuchtet, dadurch schäumt der Kleberfilm auf und während der reaktiven Zeit (zuerst bildet sich eine Haut) wird auf der Oberfläche der Schaumschicht ein Muster eingeprägt oder es erfolgt ein aufrauen durch überschleifen. Dies um den Verbund mit einer Deckschicht, üblicherweise eine Klebemörtel, zu verbessern Zur Verbesserung der Haftung können der Schaumschicht Zuschlagstoffe wie Sand o. a. beigemischt werden. Durch Walzen der Deckschicht kann die Verbindung zur Dämmplatte weiter verbessert werden. Durch das nur teilweise auftragen der Deckschicht kann Material gespart werden, die teilweise deckschichtfreien stellen werden durch den Schattenwurf der Deckschicht verschattet. Durch die teilweisen Auftrag entsteht eine grösseren Oberfläche, welche eine bessere Haftung mit der Deckschicht, üblicherweise einem Klebemörtel entsteht. Bekannt ist, dass die Algenbildung bei mitteldicken und Dickputzsystem aufgrund der grösseren Masse erheblich seltener auftreten. Bei der Lösung mit der Deckschicht mit Schaumkleber kann durch die Verwendung von massiven Zuschlagstoffen, wie Blähton, Bimsstein oder ähnlichen Materialien der gewünschte Effekt erreicht werden, selbst wenn der Aufbau dünn bleibt (Dünnschichtverfahren).

Für Anwendungen im Dachbereich und im Bereich von hinterlüfteten Fassaden wird die Schicht geglättet. Flachdächer welche mit heissgeklebten Bitumenbahnen ausgeführt werden benötigen auf EPS-Platten oder EPS-Gefällsplatten eine Schicht aus PUR- oder PIR-Platten, da die EPS-Platte schmelzen würde. Die Schicht des PU-Schaumes wird im Flachdachbereich bis zu 2 cm Dicke aufgetragen, damit die Wärme nicht bis zur EPS-Schicht gelangt.

Die Deckschicht enthält flammhemmende Stoffe, im weiteren können Zusatzstoffe beigemengt werden, welche den Inseketenfrass in hinterlüfteten Fassaden verhindern (Insektizide). Bei Kompaktfassaden ist die Algenbildung bekannt. Bekannt ist, dass in Anstrichstoffen Fungizide und Algizide beigemengt werden. Diese werden aber im Verlauf der Zeit ausgewaschen. In der Deckschicht kann ein Depot an Algizid und Fungizid eingebracht werden, welches langsam durch den Kleber wandert und so die Fassade länger schützen.

Um das aufsteigen des Feuers bei hinterlüfteten Fassaden zu verhindern, kann die Deckschicht mit einer Quellschicht bildenden Zuschlagstoff oder einem aufquellenden, dämmschichtbildenden Anstrich versehen werden. Dadurch wird der Luftzwischenraum zwischen Fassadenverkleidung und Dämmschicht geschlossen, die Sauerstoffzufuhr für den Brand wird gestoppt.

Zudem können die Platten als Brandriegelbildende Elemente ausgebildet werden, dies ist in Kompaktfassaden gefordert. Um diesen Brandschutz zu erreichen wird die Platte rundum mit einer Dämmschichtbildenden, aufquellenden Zuschagstoffen versehenen PU-Schicht beschichtet. Falls erforderlich, sind die Elemente durch hochtemperaturbeständige Vliese, Mineralwolle oder geschützte Metallteile verstärkt.

Die erfindungsgemäße Einperlenschicht wird durch Auftragen, Einstreuen o. dgl. der EPS-Perlen auf die mit einem Kleber versehende Dämmplatte gebildet. Der Kleber ist aufschäumend um eine bessere Haftung zu erreichen. Ebenso können die Perlen mit dem Kleber gemischt und gemeinsam aufgetragen werden, was einerseits eine Reduktion des Kleberbedarfs und andererseits eine bessere Schleifbarkeit der Oberfläche ermöglicht.
Die räumliche Oberfläche der Perlenschicht ermöglicht auch eine bessere Putzhaftung. Die Erfindung ermöglicht einen verbesserten Dämmwert bei geringem Materialbedarf.

Die Haftung zwischen Deckschicht und Dämmplatte ist vergleichbar mit konventionell verschweissten Platten.

Um eine akustische Entkoppelung zu erreichen, ist in Abwandlung auch möglich, zusätzlich zur Deckschicht eine innenliegende Schicht in einer Sandwichanordnung zwischen zwei Dämmplatten vorzusehen. Es ist möglich, die mittige Schaumschicht auf der Innenseite, als zu Wand gerichteten Seite, anzubringen. Die Schicht mit schalldämmender Wirkung besteht aus elastischem Schaum.

Die Dicke der Deckschicht beträgt bevorzugt weniger als 10% der Dicke der Dämmplatte.

In bevorzugter Ausführung ist das Material der Deckschicht weitgehend Weiss-gelb, orange oder gelb/orange pigmentiert (auch weiss ist möglich).

Die Deckschicht enthält erfindungsgemäß Sonnenlichtreflektierende, insbesondere Wärmestrahlen, also infrarotreflektierende Bestandteile. Als reflektierende Stoffe sind metallische, metalloxidhaltige oder mineralische Pigmente bekannt.

Die Wärmedämmplatte weist einen Lambdawert bevorzugt kleiner 0.035, insbesondere im Bereich 0.025 bis 0.029 oder gar bis 0,022 auf.

Der Querschnitt kann quaderförmig wie auch trapezförmig oder dergleichen sein.

## Patentansprüche

1. Wärmedämmplatte zur Wärmeisolation von Aussenfassaden, Sockelbereichen, Wänden, Decken, Dächern oder anderen Teilen von Gebäuden, umfassend eine Dämmplatte resp. Reflektorplatte aus expandiertem Polystyrol (EPS) und eine Deckschicht, wobei die Reflektorplatte einen hohen Anteil an atherman wirkenden Stoffen aufweist und/oder hochgeschäumt ist und die wesentliche Dämmwirkung erbringt,
und wobei die Deckschicht in Form einer Perlendeckschicht ausgebildet ist und atherman wirkende Partikel resp. Perlen aufweist, **dadurch gekennzeichnet, dass** die atherman wirkenden Partikel resp. Perlen der Deckschicht zumindest teilweise zu Schriftzügen und/oder Mustern angeordnet sind und hierzu eine andere Farbe als die übrigen Polystyrolpartikel der Deckschicht aufweisen.

2. Wärmedämmplatte nach Anspruch 1, **dadurch gekennzeichnet, dass** die Reflektorplatte vollständig aus nichtweissen Polystyrolpartikeln resp. -perlen, die atherman wirken, besteht.

3. Wärmedämmplatte nach Anspruch 1, **dadurch gekennzeichnet, dass** die Polystyrolpartikel der Deckschicht überwiegend weiss-gelb, gelb, orange oder gelb/orange pigmentiert sind und/oder der atherman wirkende Stoff aus Grafitpartikeln besteht.

4. Wärmedämmplatte nach Anspruch 1, **dadurch gekennzeichnet, dass** die Deckschicht nebst wärmereflektierenden, brandschützenden, insekten- und algenschützenden und/oder schallschützenden Eigenschaften eine hohe Wärmebeständigkeit aufweist.

5. Wärmedämmplatte nach mindestens einem der Ansprüche 1 bis 4, **dadurch gekennzeichnet, dass** sie einen Lambdawert kleiner 0,035 W/(m·K), bevorzugt einen Lambdawert zwischen 0,025 W/(m·K) und 0,029 W/(m·K), resp. kleiner 0,025 W/(m·K) aufweist.

## Claims

1. A thermal insulation panel for the thermal insulation of external facades, base areas, walls, ceilings, roofs and other parts of buildings, comprising an insulation panel or reflector panel made of expanded polystyrene (EPS) and a cover layer wherein the reflector panel has a high proportion of athermanously-acting substances and/or is highly foamed and brings about the essential insulating effect and wherein the cover layer is designed in the form of a beaded cover layer and comprises athermanously-acting particles or beads, **characterised in that** the athermanously-acting particles or beads of the cover layer are at least in parts arranged to form inscriptions or pattern and for this are of a different colour from the other polystyrene particles of the cover layer.

2. The thermal insulation panel according to claim 1 **characterised in that** the reflector panel entirely comprises non-white polystyrene particles or beads which act in an athermanous manner.

3. The thermal insulation panel according to claim 1 **characterised in that** the polystyrene particles of the cover layer are predominantly pigmented whitishyellow, yellow, orange or yellow/orange and or the athermanously-acting substance comprises graphite particles.

4. The thermal insulation panel according to claim 1 **characterised in that** in addition to heat-reflecting, fire-protection, insect and algae-repellent and/or sound protection properties, the cover layer is also exhibits a high thermal resistance.

5. The thermal insulation panel according to any one of claims 1 to 4 **characterised in that** it has a lambda value of less than 0.035 W/(m·K), preferably a lambda value of between 0.025 W/(m·K) and 0.029 W/(m·K) or less than 0.025 W/(m·K).

## Revendications

1. Panneau isolant thermique pour l'isolation thermique de façades extérieures, de socles, de murs, de plafonds, de toits et d'autres éléments de bâtiments, comprenant un panneau isolant, respectivement un panneau réflecteur en polystyrène expansé (EPS) et une couche de couverture, le panneau réflecteur comportant une part importante de matières à effet athermane et/ou étant expansé à haut volume et apportant l'effet isolant majeur et la couche de couverture étant conçue sous la forme d'une couche de couverture perlée et comportant des particules respectivement des perles à effet athermane, **caractérisé en ce que** les particules respectivement les perles à effet athermane de la couche de couverture sont placées au moins partiellement en mots écrits et/ou en motifs et sont à cet effet d'une autre couleur que les autres particules de polystyrène de la couche de couverture.

2. Panneau isolant thermique selon la revendication 1, **caractérisé en ce que** le panneau réflecteur est totalement constitué de particules, respectivement de perles de polystyrène non blanches, qui ont un effet athermane.

3. Panneau isolant thermique selon la revendication 1, **caractérisé en ce que** les particules de polystyrène de la couche de couverture sont en majeure partie pigmentées de blanc-jaune, de jaune, d'orange ou de jaune/orange et/ou **en ce que** la matière à effet athermane est constituée de particules de graphites.

4. Panneau isolant thermique selon la revendication 1, **caractérisé en ce que** parallèlement à des propriétés thermo-réfléchissantes, ignifuges, anti-insectes et anti-algues et/ou insonorisantes, la couche de couverture fait preuve d'une résistance thermique élevée.

5. Panneau isolant thermique selon au moins l'une quelconque des revendications 1 à 4, **caractérisé en ce qu'**il présente une valeur lambda inférieure à 0,035 W/(m·K), de préférence une valeur lambda comprise entre 0,025 W/(m·K) et 0,029 W/(m·K), respectivement inférieure à 0,025 W/(m·K).
